# EUROPÄISCHE PATENTSCHRIFT

(11) **EP 2 826 731 B1**
(45) Veröffentlichungstag und Bekanntmachung des Hinweises auf die Patenterteilung: **05.10.2016**
(21) Anmeldenummer: 14002340.9
(22) Anmeldetag: 08.07.2014
(51) Int. Cl.: B65G 1/04, B65G 1/06

(54) **Transportroboter mit Einzugsvorrichtung für Transportgüter**
Transport robot for goods with retracting handling device
Robot de transport de marchandises doté d'un dispositif de manutention rétractable

(30) Priorität: 16.07.2013 DE 102013011860
(43) Veröffentlichungstag der Anmeldung: 21.01.2015
(73) Patentinhaber: SERVUS Intralogistics GmbH, 6850 Dornbirn (AT)
(72) Erfinder: Beer, Christian, 6858 Schwarzach (AT)
(74) Vertreter: Riebling, Peter

(56) Entgegenhaltungen:
- EP-A1- 0 462 518
- WO-A1-94/04447
- WO-A1-2005/000718
- DE-A1- 4 205 856
- DE-U1- 20 210 214
- JP-A- S59 138 512
- US-A1- 2007 134 077
- US-A1- 2008 283 364

## Beschreibung

Die Erfindung betrifft einen Transportroboter mit Antrieb für eine Einzugsvorrichtung nach dem Oberbegriff des Patentanspruches 1.

Ein Transportroboter mit Einzugsvorrichtung für Transportgüter ist beispielsweise mit dem Gegenstand der US 2011/0008138 A1 bekannt geworden. Der dort gezeigte Transportroboter stützt sich mit Führungsschienen und Stützrollen an den Profilen eines Schienensystems ab, ist auf diesem Schienensystem selbsttätig verfahrbar und von einer externen Steuerung angesteuert.

Zur Aufnahme von seitlich in Regallagerplätzen gelagerten Transportgütern ist an diesem bekannten Transportroboter eine Einzugsvorrichtung angeordnet, die aus zueinander teleskopierbaren und verschiebbaren Einzugsarmen besteht. Jeder Einzugsarm ist gegenüber dem anderen Einzugsarm verschiebbar angetrieben, sodass eine Teleskopführung der Einzugsarme gegeben ist.

Die teleskopierbar ausfahrbaren Einzugsarme fahren seitlich an der aufzunehmenden Last entlang, und an der Unterseite des vordersten und äußerten Einzugsarms ist eine schwenkbare Klinke angeordnet, die sich an der hinteren Seite des Gutes anlegt. Nachteil dieser Anordnung ist, dass das Leergut nicht an der Unterseite ergriffen wird, sondern lediglich an der Rückseite, wobei ein Zugriff entlang der Seitenflächen erfolgt.
Durch die ausgeschwenkten Klinken, die am Ende der Teleskoparme angeordnet sind, wird das Transportgut auf die Oberfläche des Transportroboters aufgezogen.

Damit besteht jedoch der Nachteil, dass die Breite des Transportgutes an die Breite der teleskopierbaren Einzugsvorrichtung angepasst sein muss, und dass nicht beliebig schmale oder größere Teile des Transportgutes auf den Transportroboter aufgezogen werden können.

Weiterer Nachteil ist, dass eine gewisse Höhe des Transportgutes vorausgesetzt ist, weil bei niedrigem Transportgut die Klinken nicht mehr in der Lage sind, die Rückseite des Transportgutes zu erfassen und auf dem Transportroboter hinaufzuziehen.

Ferner ist es erforderlich, dass bei hintereinander in einem Regallagerplatz angeordneten Transportgütern ein gewisser Abstand zwischen der Hinterkante des ersten Transportgutes und der Vorderkante des danach folgenden Transportgutes vorgesehen werden muss, damit die Klinken der Einzugsvorrichtung überhaupt in die Lage versetzt werden, in diesen Zwischenraum einzugreifen und das jeweils vorderste Transportgut herauszuziehen.

Der teleskopische Verschiebeantrieb für die Einzugsarme ist relativ aufwendig aufgebaut und besteht im Wesentlichen aus einem umlaufenden Zahnriemen, der alle ausschiebbaren Teleskoparme umgreift, um so eine gesteuerte Verschiebung der voneinander abhängigen Teleskoparme zu gewährleisten.

Zwar ist es mit dem Gegenstand der DE 29 27 692 A1 bekannt, eine auf einer Rollenbahn verfahrbare Einzugsvorrichtung dergestalt auszubilden, dass mit einem Einzugsarm und einer am freien Ende des Einzugsarms in horizontaler Ebene schwenkbar ausgebildeter Klinke, die Bodenseite eines aufzunehmenden Gutes unterfahren werden kann. Bei dieser Druckschrift ist der Nachteil, dass ein Transportroboter fehlt.

Es wird vorausgesetzt, dass ein Zwischenraum zwischen der Hinterkante des vorderen Transportgutes und der Vorderkante des danach folgenden Transportgutes vorgesehen ist, weil die in horizontaler Achse schwenkbare und vertikal aufrichtbare Klinke in den Zwischenraum zwischen der Rückwand des Zwar ist es mit dem Gegenstand der DE 29 27 692 A1 bekannt, eine auf einer Rollenbahn verfahrbare Einzugsvorrichtung dergestalt auszubilden, dass mit einem Einzugsarm und einer am freien Ende des Einzugsarms in horizontaler Ebene schwenkbar ausgebildeter Klinke, die Bodenseite eines aufzunehmenden Gutes unterfahren werden kann. Bei dieser Druckschrift ist der Nachteil, dass ein Transportroboter fehlt.

Es wird vorausgesetzt, dass ein Zwischenraum zwischen der Hinterkante des vorderen Transportgutes und der Vorderkante des danach folgenden Transportgutes vorgesehen ist, weil die in horizontaler Achse schwenkbare und vertikal aufrichtbare Klinke in den Zwischenraum zwischen der Rückwand des vordersten und der Vorderwand des hinteren Transportgutes eingefahren werden muss.

Damit bestehen Beschränkungen im Hinblick auf die Anordnung und die Größe eines Transportgutes.

Ein Lagerplatz, der aus einer Rollenbahn gemäß dem Gegenstand der DE 29 27 692 A1 besteht, ist besonders kostenaufwendig, denn es müsste jedem Lagerplatz eine derartige Rollenbahn zugeordnet werden, was unverhältnismäßig hohe Kosten bei Lagerregalen mit insgesamt 10.000 Stellplätzen und dergleichen bedeutet.

Mit der DE 42 05 856 A1 wird bereits eine Einzugsvorrichtung mit einem Einzugsarm gezeigt. Gemäß den Figuren 2 und/oder 3 ist der Einzugsarm (Schieber 4) vollkommen von dem Förderband 28 umgeben. An den beiden horizontalen Enden weist der Einzugsarm jeweils eine Umlenkrolle 31 auf. Bei der D1 Ausführungsform besteht jedoch der Nachteil, dass bei einer vertikalen Abstützung des Einzugsarms das drehende Förderband mit der Oberfläche des Regallagerplatzes in Berührung kommt.

Der Erfindung liegt deshalb die Aufgabe zugrunde, einen Transportroboter mit Einzugsvorrichtung so weiterzubilden, dass unabhängig von der Größe des Transportgutes eine beliebige Anzahl von hintereinander liegenden und/oder gegebenenfalls auch seitlich aneinander anliegenden Transportgütern erfasst und auf dem Transportroboter gezogen werden können.

Transportroboter angetrieben ist, der an seiner vorderen und an der gegenüberliegenden Seite jeweils einen Einzugskopf aufweist, und die beiden Einzugsköpfe durch einen gemeinsamen Zahnriemen umschlungen sind, wobei der Zahnriemen als endloses Trum über die Umlenkrollen eines im Transportroboter längs verschiebbar angetriebenen Schlittens geführt ist.

Mit dieser technischen Lehre ergibt sich der Vorteil, dass ein längssymmetrischer, beidendiger Einzugsarm einen linken und einen rechten Einzugskopf aufweist, und die beiden Einzugsköpfe transportschlüssig über einen gemeinsamen Zahnriemen miteinander verbunden sind. Der Zahnriemen ist von einem ersten Antriebsmotor angetrieben, und der Zahnriemen läuft als endloses Trum über die Umlenkrollen des im Transportroboter in Richtung der Längsachse des Einzugsarms verschiebbar angetriebenen Schlittens.

Damit ergibt sich der Vorteil, dass die Oberseite des oberen Trums des Zahnriemens zum Untergreifen einer Last bestimmt ist, ohne dass es einer ausschwenkbaren Klinke bedarf, weil sich der Transportriemen mit seiner Oberfläche reibschlüssig an der Unterseite einer aufzunehmenden Last anlegt, und bei Antrieb des Zahnriemens wird das Transportgut aufgrund der reibschlüssigen Auflage auf dem oberen Trum des Zahnriemens auf den Transportroboter aufgezogen.

Demnach ist wichtig, dass nunmehr die Last aufnehmende Fläche des Einzugsarms als oberes Trum eines endlos geführten Zahnriemens ausgebildet ist, der Zahnriemen in seiner Verschiebungslage durch einen ersten Antriebsmotor angetrieben ist.

In Abhängigkeit vom Antrieb des Zahnriemens wird somit die Last auf dem Zahnriemen bewegt, und entweder von der Oberseite des Einzugsarms auf einen Regallagerplatz abgeschoben oder - umgekehrt - von einem Lagerplatz eines Regals aufgenommen und auf die Oberseite des Transportroboters aufgezogen.

Wichtig ist, dass der endlose Zahnriemen nun gleichzeitig Teil eines in Längsrichtung verschiebbaren Einzugsarms ist, der beidseitig aus dem Transportroboter herausschiebbar ist. Zu diesem Zweck ist vorgesehen, dass der endlose Zahnriemen über geeignete Umlenkrollen eines Schlittens geführt ist, und der Schlitten durch einen zweiten Antriebsmotor verschiebbar im Transportroboter angetrieben ist. Der Schlitten ist demnach in Richtung der Längsachse des Einzugsarms entweder auf die linke oder die rechte Seite des Transportroboters verschiebbar angetrieben, und kann in jeder beliebigen Zwischenstellung stehen bleiben.

Entsprechend der Verschiebung des Schlittens im Transportroboter wird somit der Einzugsarm mit seinem vorderen Einzugskopf nach links oder rechts aus dem Transportroboter herausgeschoben und ist zum Untergreifen der Last geeignet, indem sich das obere Trum des erwähnten Zahnriemens reibschlüssig an der Bodenseite des Transportgutes anlegt.

In einer ersten Ausgestaltung der Erfindung ist es vorgesehen, dass jeder Einzugsarm nur aus einem einzigen Zahnriemen besteht, der zum Unterfahren der Bodenseite des Transportgutes geeignet ist.

Um aber eine gewisse Symmetrie bei der Einzugsbewegung zu erreichen, wird es bevorzugt, wenn statt des einen Zahnriemens nun zwei parallel zueinander und im gegenseitigen Abstand angeordnete Zahnriemen verwendet werden, die synchron angetrieben werden. Die beiden Zahnriemen werden über zueinander parallele Umlenkrollen auf dem in der Mitte zwischen den Zahnriemen angeordneten Schlitten geführt, sodass eine synchrone Bewegung der beiden Zahnriemen über die Umlenkrollen am Schlitten erfolgt.

Der Schlitten wird demnach in der einen oder anderen Querachse des Transportroboters seitlich verschoben, und damit werden auch die beiden Zahnriemen synchron aus der linken oder rechten Seite des Transportroboters herausgeschoben.

Durch die Tatsache bedingt, dass im Zwischenraum zwischen den beiden Zahnriemen der verschiebbar angetriebene Schlitten vorgesehen ist, ergibt sich ein besonders gedrängter Aufbau und eine klein bauende Vorrichtung, weil der mittig angeordnete Schlitten sowohl zur Synchronisation des linken als auch des rechten Zahnriemens im gemeinsamen Einzugsarm dient.

In einer weiteren Ausgestaltung der Erfindung ist es vorgesehen, dass die doppelten Zahnriemen nun ebenfalls verdoppelt angeordnet sind, sodass auf der Oberfläche eines Transportroboters zwei parallel zueinander angeordnete Einzugsarme vorgesehen sind, wobei jeder Einzugsarm aus jeweils zwei synchron miteinander angetriebenen Zahnriemen besteht.

Demnach sind bei dieser Ausführungsform insgesamt vier Zahnriemen vorhanden, wobei jeweils zwei Zahnriemen einen Einzugsarm bilden, und jeder Einzugsarm wird durch einen getrennt angetriebenen Schlitten gebildet, der jeweils zwischen den beiden Zahnriemen angeordnet ist und dort verschiebbar ist.

Auf diese Weise ist die Einzugsvorrichtung auf dem Transportroboter aus jeweils zwei zur Seite her ausfahrbaren und einfahrbaren Einzugsarmen gebildet, und jeder Einzugsarm ist jeweils aus zwei Zahnriemen gebildet, die zum Unterfahren der Bodenseite des Transportgutes geeignet sind.

In der folgenden Figurenbeschreibung wird diese Doppel-Anordnung mit zwei Einzugsarmen und insgesamt vier Zahnriemen beschrieben, obwohl die Erfindung hierauf nicht beschränkt ist.

Es wird nochmals betont, dass in der einfachen Ausführungsform ein solcher Einzugsarm nur aus einem einzigen, endlosen Zahnriemen bestehen kann, der über einen einzigen verschiebbar angetriebenen Schlitten geführt ist.

Durch die Ausbildung des Zahnriemens als in sich geschlossener, umlaufenden Zahnriemen, der über feste Umlenk- und Antriebsrollen im Transportroboter geführt ist und ferner über Umlenkrollen im verschiebbaren Schlitten, ergibt sich der Vorteil, dass eine besonders einfache, verkantungsfreie und platzsparende Aufnahme der Last möglich ist.

Es ist vorgesehen, dass der Einzugskopf, der jeweils an dem äußeren freien Ende des Einzugsarms angeordnet ist, auf die vordere Kante des Transportgutes auffährt und dass an dieser Seite des Einzugskopfs eine Auflaufschräge angeordnet ist, sodass beim Auffahren des Einzugskopfes an die vordere untere Bodenkante des Transportgutes dieses geringfügig angehoben wird und der Zahnriemen des Einzugskopfes genau an dieser Stelle mit dem Transportgut verhakt wird und danach nicht mehr weiterbewegt wird.

In dieser angehobenen Schwenklage erfolgt nun ein Antrieb des Zahnriemens dergestalt, dass der gesamte Einzugsarm weiter unter die Bodenfläche des Transportgutes unterfahren wird, es jedoch nicht zu einer Relativbewegung des oberen Trums des Zahnriemens und der Bodenfläche des Transportgutes kommt. Damit wird eine besonders schonende Aufnahme des Transportgutes gewährleistet, weil eine Relativbewegung und damit ein unerwünschter Abrieb der Oberseite des Zahnriemens mit der Bodenfläche des Transportgutes vermieden wird.

Wichtig ist demnach, dass bei dieser Anhebestellung nun der Einzugsarm aufgrund des synchronen Antriebes des Schlittens mit dem zweiten Antriebsmotor und aufgrund des damit synchronisierten Antriebes der Längsverschiebung des Transportriemens eine Relativbewegung zwischen dem Zahnriemen an der Bodenseite des Transportgutes und dem Transportgut selbst vermieden wird und der Einzugsarm nun vollständig unter die Bodenseite des Transportgutes gefahren wird.

Hierbei kommt es nicht nur darauf an, dass eine Lücke zwischen der Rückwand des ersten Transportgutes und der Vorderwand des sich daran anschließenden zweiten Transportgutes vorliegt, weil auf eine aufstellbare oder einschwenkbare Klinke vollkommen verzichtet werden kann.

Die Auszugslänge des jeweiligen Einzugsarms wird demnach der Länge des Transportgutes angepasst, und es wird dafür gesorgt, dass nur das jeweils aktuell zu ergreifende Transportgut mit der Bodenseite untergriffen wird, während das dicht daran anschließende zweite Transportgut nicht mehr vom Zahnriemen erfasst wird. Damit wird der vorher genannte Vorteil erreicht, dass aufgrund der dichten Anordnung von Transportgütern, die hintereinanderliegend in einem Regalstellplatz angeordnet sind, eine um 20 Prozent verbesserte Ausnutzung der Stellplatzkapazität in einem solchen automatisierten Regal gewährleistet ist.

Die Erfindung sieht in einer Weiterbildung auch vor, dass die Transportgüter auch seitlich dicht an dicht aneinander anliegen können und trotzdem ist mit den Merkmalen der Erfindung auch ein präzises Greifen und Verschieben von seitlich aneinander anliegenden Transportgütern möglich.

Nach einem weiteren Merkmal der Erfindung wird es bevorzugt, wenn das vordere Ende des jeweiligen Einzugskopfes durch eine Stützrolle abgestützt ist, die sich in einem geeigneten Profil des Regallagerplatzes abstützt und dort entlang verschiebbar ausgebildet ist.

Auf diese Weise wird die Last, die beim Anheben des Transportgutes auf den Einzugsarm ausgeübt wird, von der Stützrolle aufgenommen und wirkt selbst nicht im Sinne einer Verbiegung oder einer Drehmomentenübertragung auf den Einzugsarm. Dieser ist dadurch biegestabil und kann über sehr lange Auszugslängen von zum Beispiel bis zu 1000 mm ausgeschoben werden, was von der Größe des Transportroboters abhängt.

Die Länge des Einzugsarms entspricht der Breite des Transportroboters und nach der Erfindung kann deshalb der Einzugsarm jeweils zur linken oder rechten Seite in der Länge ausgefahren werden, entsprechend der Breite des Transportroboters. Hieraus ergibt sich die vorher genannte Einzugslänge, die bevorzugt im Bereich zwischen 600 bis 1000 mm liegt.

Vorteilhaft ist, dass auch besonders kleine Objekte aufgenommen werden können, weil die Länge des Einzugsarms beliebig verkürzbar oder verlängerbar ist. Ebenso können niedrige Gegenstände aufgenommen werden, weil es nicht mehr auf die formschlüssige Anlage von Einzugsklinken an der Hinterseite eines Transportgutes ankommt.

Weiterer Vorteil der Erfindung ist, dass auch mehrere hintereinander liegende Transportgüter gleichzeitig untergriffen und auf den Transportroboter aufgezogen oder von diesem abgeschoben werden können.

Ferner wird es bevorzugt, wenn für besonders breite Transportgüter zwei zueinander parallele Einzugsarme auf dem Transportroboter angeordnet sind.

Die Anordnung auf dem Transportroboter muss nicht zwangsläufig bedeuten, dass die Einzugsanordnung mit dem Transportroboter unlösbar integriert ist. Es kann auch eine Modulanordnung vorgesehen werden, bei der die gesamte Einzugsvorrichtung, die entweder aus einem einzigen oder aus zwei zueinander parallelen Einzugsarmen besteht, in einem Einzugsmodul aufgenommen ist, welches seinerseits mit dem Transportroboter verbunden ist.

Durch die Tatsache bedingt, dass das Transportgut auf der Oberseite eines Zahnriemens mit seiner Bodenseite ruht, kann der gesamte Einzugsarm auch als Stetigförderer verwendet werden. Dies bedeutet, dass zum Ausfahren des Einzugsarms nicht der Schlitten angetrieben werden muss. Vielmehr bleibt der Einzugsarm in seiner mittigen Position auf dem Transportroboter und das Transportgut wird lediglich durch den Verschiebeantrieb des endlosen Zahnriemens von der Mitte des Transportroboters zu einer Seite hin gefördert und kann zum Beispiel auf ein seitlich daran anschließendes Transportband abgegeben werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: stirnseitige Ansicht eines Transportroboters mit einer Einzugsvorrichtung im eingefahrenen Zustand
Figur 2: das Detail H nach Figur 1 in vergrößerter Darstellung
Figur 3: der Transportroboter nach Figur 1 mit einer linksseitig ausgefahrenen Einzugsvorrichtung
Figur 4: das Detail D nach Figur 3
Figur 5: eine gleiche Darstellung wie Figur 3, wobei jedoch erst die vordere Kante des Transportgutes unterfahren wurde
Figur 6: eine vergrößerte Detaildarstellung gemäß C in Figur 5
Figur 7: schematisiert die Draufsicht auf einen Transportroboter mit zwei zueinander parallel angeordneten Längsförderern, wobei jeder Längsförderer aus einem Paar von synchron angetriebenen Zahnriemen besteht
Figur 8: die geschnittene Stirnansicht der Einzugsvorrichtung mit Darstellung des verschiebbar angetriebenen Schlittens gemäß einem Schnitt B-B in Figur 9
Figur 9: die Draufsicht auf die Anordnung nach Figur 8
Figur 10: die Draufsicht auf eine ähnliche Anordnung wie Figur 9
Figur 11: der Schnitt gemäß der Linie A-A in Figur 10 durch den verschiebbar angetriebenen Schlitten

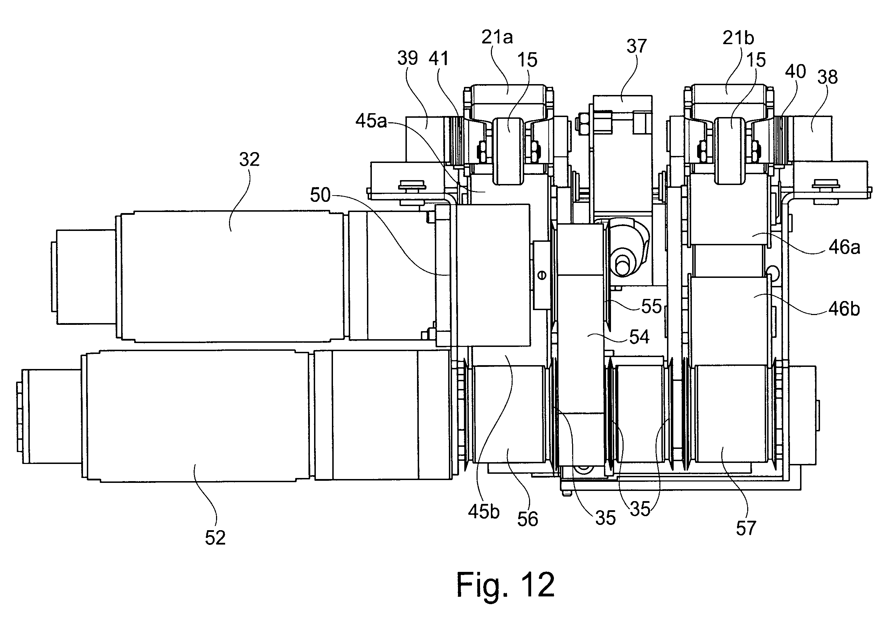

Figur 12: die Stirnansicht auf die Anordnung nach Figur 10
Figur 13: ein Schnitt ähnlich der Figur 8, wobei jedoch in einer anderen Ebene geschnitten wurde, um die Umlenkrollen am verschiebbar angetriebenen Schlitten zu zeigen
Figur 14: eine schematisierte Darstellung des Riemenantriebs eines Längsförderers mit einem in der Mittenstellung angeordneten Schlitten
Figur 15: die gleiche Darstellung wie Figur 14, bei der der Schlitten zwecks Verschiebung des Einzugsarmes in einer Richtung verschoben ist

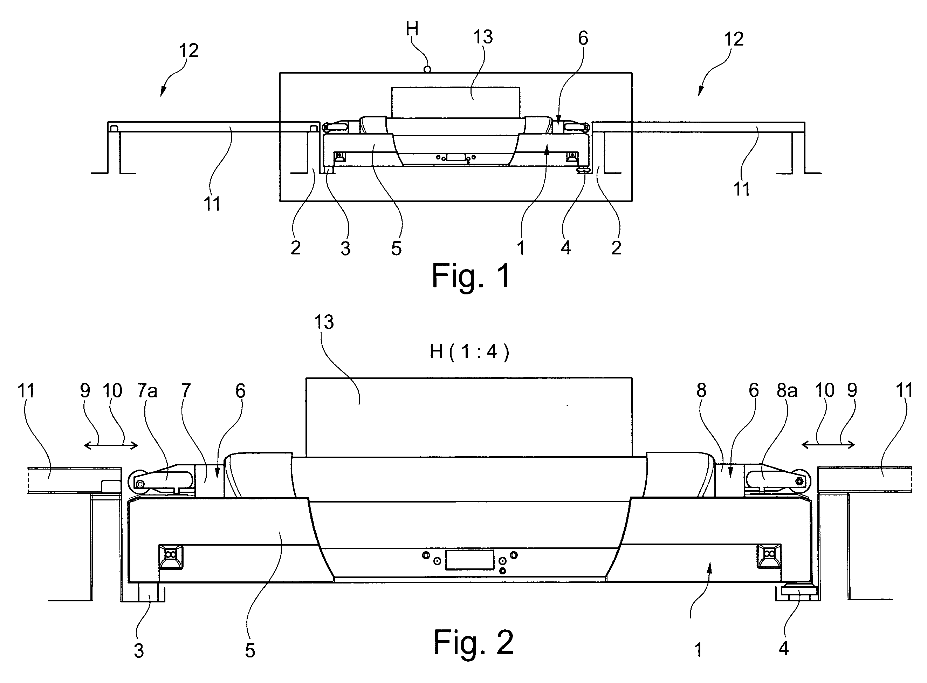

Der grundsätzliche Aufbau der Einzugsvorrichtung nach der Erfindung ist aus den Figuren 1 bis 4 zu entnehmen.

Gemäß Figur 1 ist auf einem Transportroboter 1 eine Einzugsvorrichtung angeordnet, die als (mindestens einziger) Längsförderer 6 ausgebildet ist.

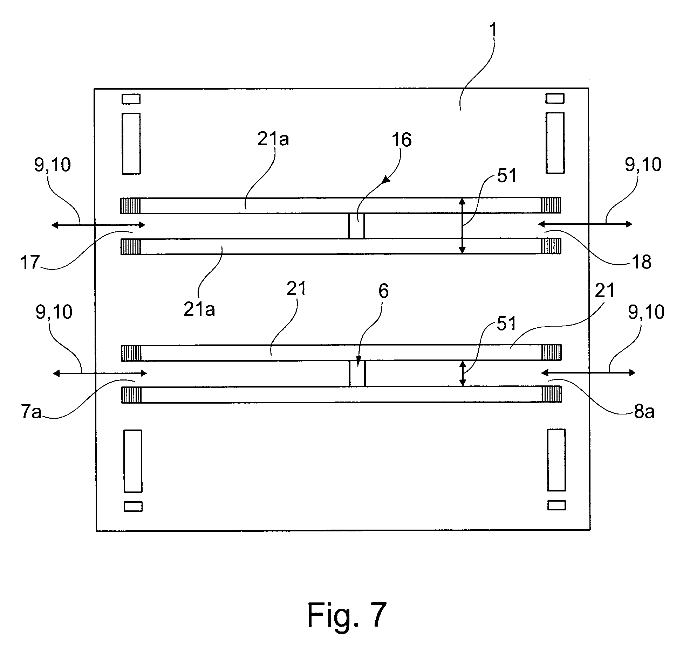

Gemäß der Darstellung in Figur 7 sind jedoch in einer Erweiterung der Erfindung auf der Oberseite des Transportroboters 1 zwei zueinander parallele Längsförderer 6, 16 angeordnet, wobei jeder Längsförderer 6 oder 16 nach dem gleichen Prinzip arbeitet. Es genügt demnach, den Aufbau eines einzigen Längsförderers zu beschreiben, weil der andere genau gleich ausgebildet ist.

Jeder Längsförderer 6, 16 weist voneinander beabstandete und parallel zueinander angetriebene Zahnriemen 21 auf, wie dies in Figur 7 dargestellt ist.

Der Zahnriemen des Längsförderers 16 ist mit 21 bezeichnet, während der Zahnriemen des Längsförderers 6 mit 21a bezeichnet ist.

Es sind insgesamt pro Längsförderer zwei zueinander beabstandet und synchron miteinander angeordnete Zahnriemen 21a, 21a bzw. 21, 21 vorhanden, wobei in der folgenden Beschreibung lediglich der Antrieb eines einzigen Zahnriemens 21a oder 21 beschrieben wird, weil die übrigen Zahnriemen der Vierfach-Zahnriemen-Anordnung nach Figur 7 genau gleich ausgebildet und angetrieben sind.

Wichtig ist bei der Darstellung nach Figur 7, dass zwischen den beiden zueinander beabstandet angeordneten Zahnriemen des Längsförderers 6 und 16 jeweils ein Schlitten 33 angeordnet ist, der dafür sorgt, dass die beiden Zahnriemen synchron zueinander angetrieben sind und bei dessen Verschiebung der Einzugskopf 7a, 8a am jeweiligen freien Ende des Einzugsarms 7, 8 entweder wahlweise nach links oder rechts aus dem Transportroboter herausgeschoben wird.

In Figur 1 ist dargestellt, dass der Längsförderer 6 gemäß Figur 7 auf der linken Seite einen Einzugsarm 7 aufweist, der zum Längsförderer 6 gehört und der an seiner freien Seite einen Einzugskopf 7a ausbildet.

Das Gleiche gilt für die rechte Seite des Längsförderers 6 in Figur 2, wo erkennbar ist, dass der dortige Einzugsarm 8 einen Einzugskopf 8a bildet, der in den Pfeilrichtungen 9, 10 einfahrbar oder ausfahrbar ist. Gleiches gilt für den Einzugsarm 7 auf der linken Seite.

Der Transportroboter 1 ist auf einem Schienenpaar 2 in der Zeichenebene der Figur 1 verschiebbar angetrieben und weist auf der linken Seite paarweise angeordnete Laufräder 3 auf, die auf der rechten Seite von Führungsrädern 4 abgestützt sind.

Er weist im Übrigen einen Grundrahmen 5 auf, auf dem die erfindungsgemäße Einzugsvorrichtung 6, 16 angeordnet ist.

Zur Aufnahme oder Abladung eines Transportgutes 13 wird demnach der Transportroboter 1 etwa fluchtend in Gegenüberstellung zu einem Ablageblech 11 eines Regallagerplatzes 12 verfahren. Dies ist in den Figuren 1 und 2 dargestellt. Das Transportgut 13 ruht noch auf der Oberseite des Längsförderers 6.

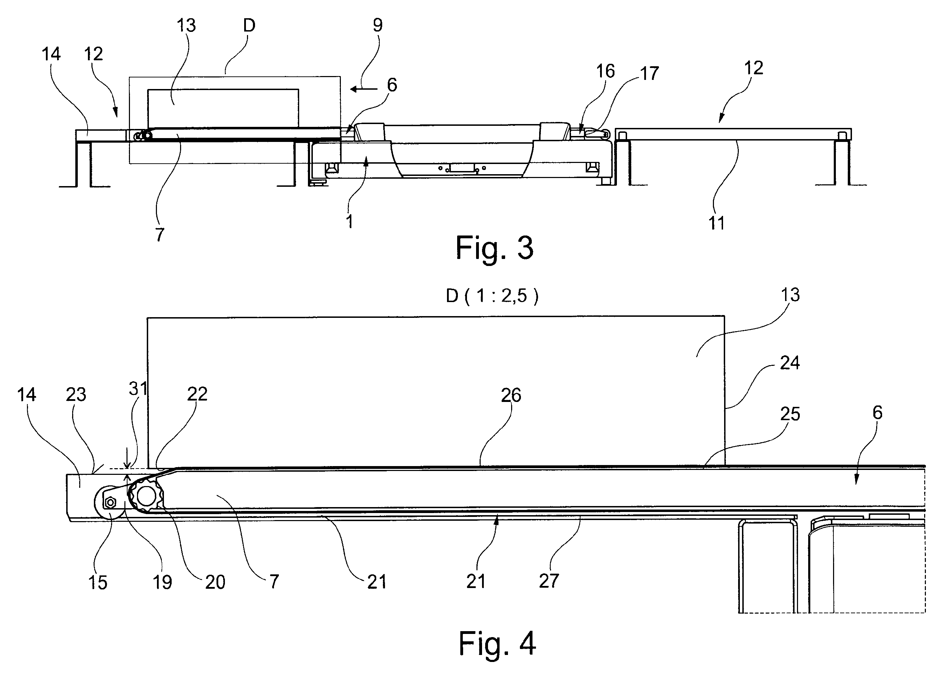

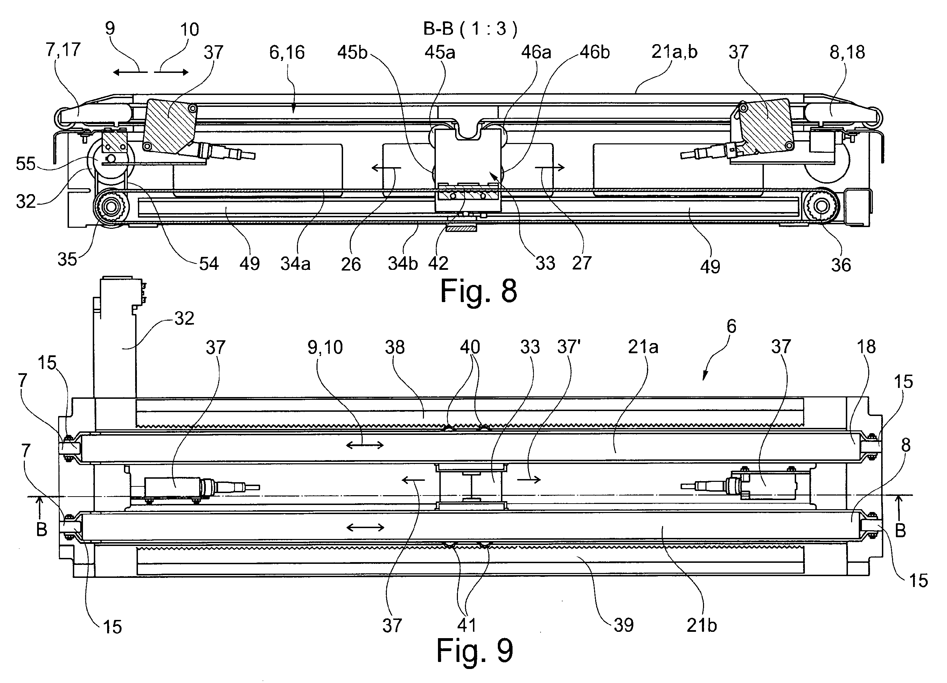

Gemäß Figuren 3 und 4 wird das Transportgut 13 abgeladen, wobei die Bodenseite des Transportgutes auf dem oberen Trum eines endlos geführten Zahnriemens 21 aufliegt. Dieses obere Trum ist in Figur 8 mit 21a bzw. 21b bezeichnet.

Der Einzugskopf 7, 8 ist durch ein umlenkendes Riemenrad 20 geführt, welches nicht angetrieben ist, wobei an der Achse des Riemenrades 20 ein Stützarm 19 ansetzt, der durch eine vordere Stützrolle 15 abgestützt ist, die sich im Hohlprofil 14 des Regalplatzes 12 abstützt.

Auf diese Weise kann der Einzugsarm 7, 8 über eine beliebige Einzugslänge ausgefahren werden, ohne dass er sich verbiegt, weil die Stützrollen 15 im Hohlprofil 14 des Regallagerplatzes 12 die erforderliche Abstützung erbringen.

Nach einem Merkmal der Erfindung wird es im Übrigen bevorzugt, wenn das Transportgut 13 beim Aufnehmen in Pfeilrichtung 28 angehoben wird.

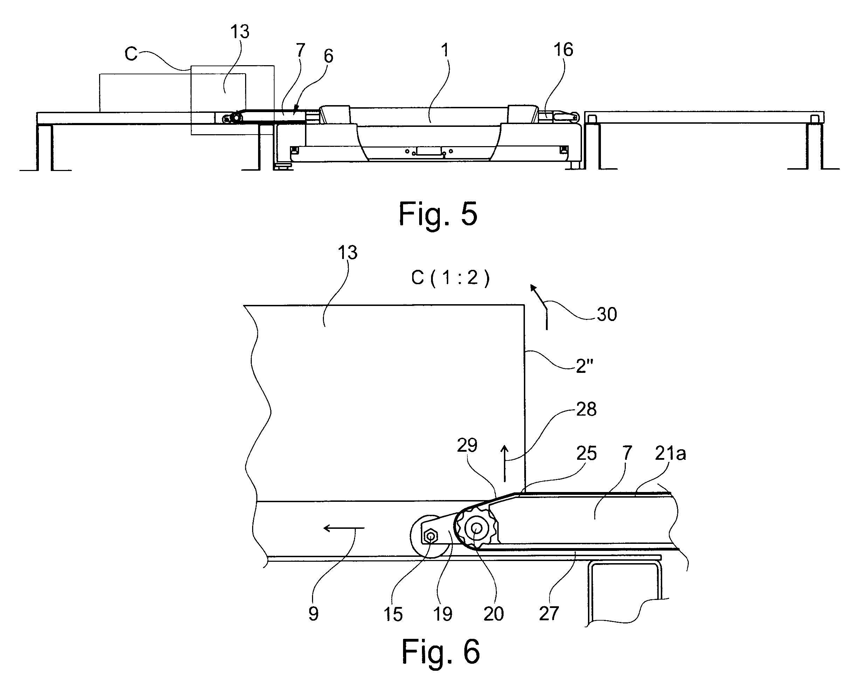

Es wird eine Hubbewegung 28 bezüglich der Vorderkante 24 gemäß Figur 6 dadurch vorgenommen, dass der Einzugsarm 7 zunächst in Pfeilrichtung 9 bis an die Vorderkante 24 des Transportgutes 13 heranfährt und dieses mit einer Hubbewegung 28 anhebt, weil der Zahnriemen 21 mit seinem oberen Trum eine Auflaufschräge 29 bildet, die dafür sorgt, dass die Vorderkante 24 des Transportgutes 13 in Pfeilrichtung 30 nach oben verschwenkt wird.

Der Zahnriemen 21 verbleibt bei der Position 25 mit dem Transportgut in Eingriff und wird nicht mehr weiter verschoben. Nachdem das Transportgut 13 mit der Hubbewegung 28 angehoben wurde, verbleibt der Transportriemen 21 bei Position 25 fest stehend. Es wird nur noch der Einzugsarm 7 in Pfeilrichtung 9 weiter unter die feststehende Bodenfläche des Transportgutes verfahren, ohne dass es zu einer Relativbewegung des oberen Trums 21a des Zahnriemens 1 und der Bodenfläche des Transportgutes 13 kommt.

Dies sorgt für eine besonders schonende Behandlung des Transportgutes und verhindert, dass es beim Aufnehmen oder Abschieben eine unerwünschte Relativbewegung zum Einzugsarm ausführt.

In der allgemeinen Beschreibung wurde darauf hingewiesen, dass jeder Einzugsarm 6 aus zwei zueinander parallel angetriebenen Zahnriemen 21 bzw. 21 a besteht.

Die beiden Zahnriemen 21 bzw. 21a sind synchron über einen im Zwischenbereich zwischen den Zahnriemen verschiebbar angeordneten Schlitten 33 synchronisiert.

Entsprechend der Verschiebung des Schlittens 33 in den Pfeilrichtungen 9, 10 wird somit der gesamte Einzugsarm 7 oder 8 des Längsförderers 6 nach links oder rechts verschoben, ebenso wie der weitere, parallel und im Abstand hierzu angeordnete Einzugsarm 17, 18 des Längsförderers 16.

Aus Figur 4 ergibt sich, dass das Transportgut mit der Hubbewegung in Pfeilrichtung 28 von der Oberseite seiner Auflagefläche im Regalplatz 12 abgehoben wird, wodurch sich gemäß Figur 4 die Oberkante 23 des Hohlprofils 14 nun unterhalb von der Bodenseite 22 des Transportgutes 13 befindet, und dadurch eine Freistellung 31 gebildet ist.

Damit ist das Transportgut mit seiner Bodenseite 22 voll auf der Oberfläche der beiden parallel zueinander angeordneten Zahnriemen 21a, 21 b aufgenommen und wird allein von diesen Zahnriemen getragen.

Anhand der Figuren 8 und 9 wird nun der Verschiebeantrieb der Einzugsarme 7, 8 dargestellt.

Es ist erkennbar, dass im Mittenbereich des Transportroboters 1 bzw. in einem mit dem Transportroboter 1 verbundenen Modul, welches die Einzugsvorrichtung bildet, ein Schlitten 33 verschiebbar angetrieben ist, und zwar in den Pfeilrichtungen 26 und 27. Der Verschiebeantrieb in den Pfeilrichtungen 26, 27 erfolgt dadurch, dass der Schlitten eine Klemmvorrichtung 42 zur klemmenden Verbindung mit dem oberen Trum 34a eines Zahnriemens 34 trägt, und der Zahnriemen 34 über eine drehend angetriebene Antriebsrolle 35 herum geführt ist und in Form eines unteren Trums 34b über eine nicht angetriebene Umlenkrolle 36 geführt ist.

Der Antrieb der Antriebsrolle 35 erfolgt über einen Übertragungsriemen 54, der reibschlüssig mit dem Antriebsritzel 55 eines Antriebsmotors 32 verbunden ist.

Der Antriebsmotor 32 bildet den Verschiebeantrieb für den Schlitten 33 in den Pfeilrichtungen 26 und 27.

Zur Erfassung der notwendigen Auszugstiefe oder Ausschubtiefe des jeweiligen Einzugsarms 7, 8 sind an jeder Seite nach außen gerichtete Distanzmesser 37 vorgesehen, die gegen die Vorderseite des Transportgutes 13 gerichtet sind und den Abstand zum Transportgut erfassen. Es kann sich um ein Laserdistanzmessgerät handeln. Stattdessen können auch Ultraschalldistanzmessgeräte oder optische Entfernungsmessgeräte verwendet werden.

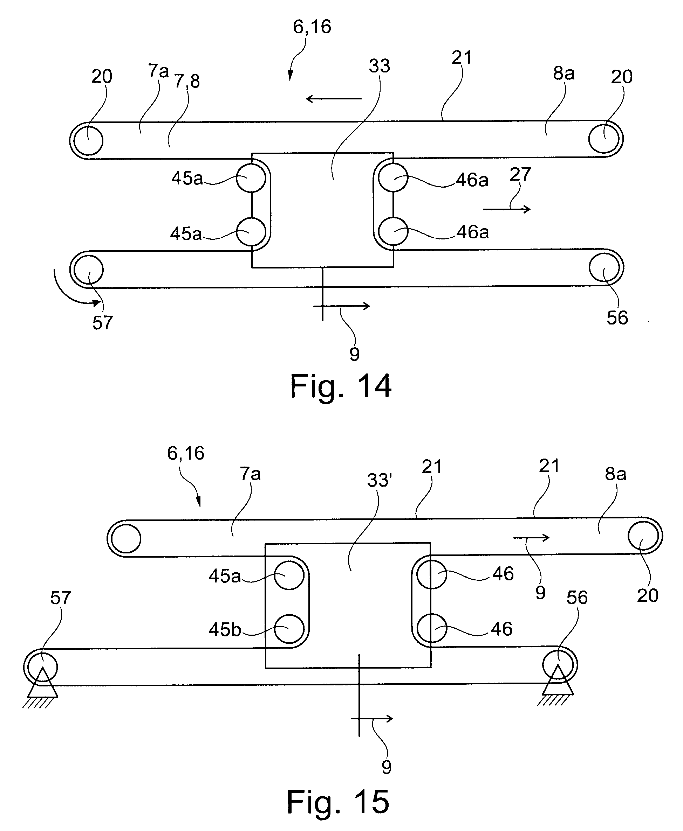

Wird der Schlitten 33 in Pfeilrichtung 27 gemäß Figur 14 nach rechts verschoben, wird der gesamte Einzugsarm nach rechts verschoben und der rechtsseitige Einzugskopf 8a wird ausgeschoben, während der linksseitige Einzugskopf in den Mittenbereich des Transportroboters 1 verschoben wird.

Damit wird der gesamte Einzugsarm nach rechts ausgeschoben, wenn der Schlitten 33 gemäß Figuren 14 und 15 in Pfeilrichtung 27 nach rechts verschoben wird.

Nach Figur 9 synchronisiert der Schlitten die beiden endlos geführten Zahnriemen miteinander, weil der Schlitten gemäß Figur 9 im Zwischenraum zwischen den beiden endlos geführten Zahnriemenpaaren 21 a, 21 b angeordnet ist.

In Figuren 14 und 15 ist nur ein einziger, endlos geführter Zahnriemen gezeigt, während in Wirklichkeit nach Figur 9 der Schlitten 33 im Zwischenraum zwischen zwei synchron angetriebenen Zahnriemen angeordnet ist.

Der Schlitten 33 bildet mit seinen Umlenkrollen 45a, 45b und 46a und 46b das Synchronisierungselement zum synchronen Antrieb der zwei zueinander parallelen und gemeinsam angetriebenen Zahnriemen 21 a und 21 b.

Nachfolgend wird der Antriebsmotor 52 beschrieben, der für den Antrieb der Zahnriemen 21 vorgesehen ist, um eine Längsverschiebung des gesamten Zahnriemens - unabhängig von der Verschiebungslage des Schlittens 33 - zu erreichen.

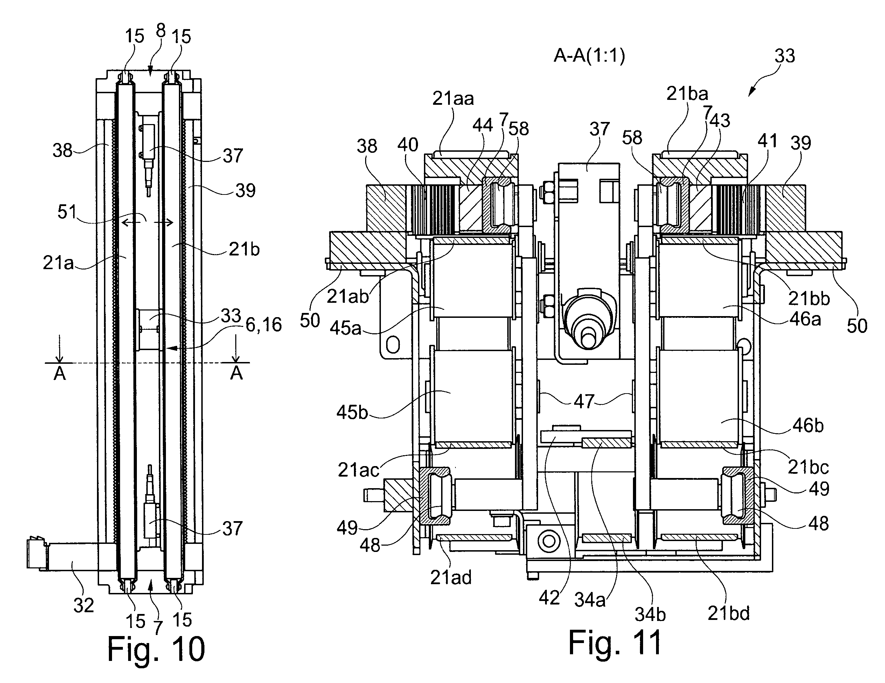

Zu diesem Zweck zeigt die Figur 11 einen Schnitt durch den Schlitten 33. Auf einem Halterahmen 50 sind drehbare Umlenkrollen 45a, 45b und 46a, 46b angeordnet.

Der Halterahmen 50 ist mithilfe von Führungsrollen 58 im Einzugsarm 7 bzw. 8 verschiebbar geführt.

Zu diesem Zweck sind Führungen 49 vorgesehen, die im jeweiligen Einzugsarm 7 oder 8 angeordnet sind.

Auf dem Schlitten bzw. auf dem Halterahmen 50 des Schlittens 33 sind die Achsen für die Ritzelräder 40, 41 befestigt, wie sich dies aus Figur 9 im Vergleich mit Figur 11 ergibt.

Diese Ritzelräder 40, 41 wälzen sich an feststehenden Zahnstangen 38, 39 ab, die jeweils über einen Halterahmen 50 mit dem Transportroboter 1 verbunden sind. Demnach wälzt sich jedes Ritzelrad 40, 41 an der zugeordneten feststehenden Zahnstange 38, 39 im Transportroboter 1 ab.

Im jeweiligen Einzugsarm 7, 8 ist jeweils eine Zahnstange 43, 44 angeordnet, die mit jeweils dem Ritzelrad 40, 41 kämmt.

Damit wird eine Übersetzung der Verschiebebewegung des Schlittens 33 um die doppelte Länge der Verschiebebewegung des Einzugsarms 7, 8 erreicht. Wird demnach der Schlitten 33 in den eingezeichneten Pfeilrichtungen 9, 10 um einen bestimmten Weg verschoben, so wird der dazu gehörende Einzugsarm 7, 8 um den doppelten Weg verschoben.

Die Übersetzung der Verschiebebewegung des Schlittens 33 um die doppelte Verschiebelänge des Einzugsarms 7, 8 erfolgt also durch die Übersetzung von den Ritzelrädern 40, 41, die sich einerseits an den feststehenden Zahnstangen 38, 39 abwälzen, und die sich ferner über die Verdoppelung an der gegenüberliegenden Seite von mit dem Schlitten 33 verbundenen Zahnstangen 33, 34 abwälzen.

Damit wird also eine doppelte Übersetzung der Verschiebebewegung erreicht.

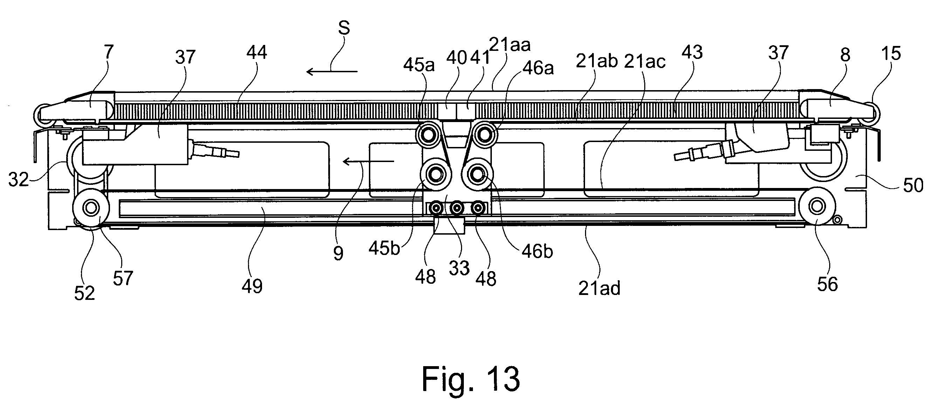

Nachfolgend wird dargestellt, wie die Umlenkung des Zahnriemens 21 über den Schlitten 33 erfolgt. Dies ist in Figur 13 dargestellt.

Der Schlitten 33 ist in einer Führung 49 im Transportroboter 1 bzw. in einem Modul des Transportroboters 1 über Führungsrollen 48 verschiebbar geführt.

Der Schlitten 33 trägt zwei zueinander beabstandete und paarweise angeordnete Umlenkrollen 45a, 45b und 46a, 46b.

Alle Umlenkrollen 45, 46 sind zur Umlenkung eines durchgehenden Zahnriemens 21 bestimmt, wobei das oberste, die Bodenseite des Transportgutes 13 tragende Trum des Zahnriemens als 21 aa bezeichnet ist.

Das darunterliegende Trum ist mit 21 ab bezeichnet, während das mittlere dritte Trum mit 21ac und das unterste Trum mit 21ad bezeichnet ist.

Die untere Umlenkung des Zahnriemens 21 erfolgt über den Antriebsmotor 52, der die Riemenscheibe 57 drehend antreibt, während die andere Riemenscheibe 56 lediglich der Umlenkung dient. Demnach ist der Zahnriemen 21 endlos über die Riemenräder 20 am jeweiligen Einzugsarm geführt.

In Figur 13 sind auch die vorher erwähnten Ritzelräder 40, 41 eingezeichnet, die mit der jeweiligen Zahnstange 43, 44 korrespondieren.

Aus Figur 7 ergibt sich, dass jeweils ein Abstand 51 zwischen den einzelnen Zahnriemen 21, 21a vorhanden ist.

In den Figuren 14 und 15 ist das Antriebsprinzip des endlosen Zahnriemens 21 dargestellt. Bei einer Verschiebung des Schlittens 33 in der eingezeichneten Pfeilrichtung 9 wird auch gleichzeitig der Einzugsarm in Pfeilrichtung 9 nach rechts verschoben. Gleichzeitig wird der endlos umlaufende Zahnriemen 21 mitgenommen und ist getrennt von der Verschiebung des Schlittens 33 verschiebbar angetrieben.

Es wird noch darauf hingewiesen, dass statt eines Zahnriemens 21 auch andere Längsförderelemente verwendet werden können, wie zum Beispiel Schnurriemen, Ketten, Flachriemen, Keilriemen und dergleichen mehr.

Der Begriff "Zahnriemen" ist also im weiten Umfang zu verstehen, weil er auch durch Schnurriemen, Rundriemen, Dreiecksriemen, Keilriemen und dergleichen ersetzt sein kann.

### Zeichnungslegende

- 1: Transportroboter
- 2: Schienenpaar
- 3: Laufrad
- 4: Führungsrad
- 5: Grundrahmen
- 6: Längsförderer
- 7: Einzugsarm (von 6)
- 7a: Einzugskopf
- 8: Einzugsarm (von 6)
- 8a: Einzugskopf
- 9: Pfeilrichtung
- 10: Pfeilrichtung
- 11: Ablageblech
- 12: Regalplatz
- 13: Transportgut
- 14: Hohlprofil
- 15: Stützrolle
- 16: Längsförderer
- 17: Einzugsarm (von 16)
- 18: Einzugsarm (von 16)
- 19: Stützarm (von 15)
- 20: Riemenrad
- 21: Zahnriemen aa, ab, ac, ad
- 22: Bodenseite (von 13) ba, bb, bc, bd
- 23: Oberkante (von 14)
- 24: Vorderkante (von 13)
- 25: Position
- 26: Pfeilrichtung
- 27: Pfeilrichtung
- 28: Hubbewegung
- 29: Auflaufschräge
- 30: Pfeilrichtung
- 31: Freistellung
- 32: Antriebsmotor (für 33), Verschiebeantrieb
- 33: Schlitten
- 34: Zahnriemen (für 33)
- 34a: oberes Trum
- 34b: unteres Trum
- 35: Antriebsrolle
- 36: Umlenkrolle
- 37: Distanzmesser
- 38: Zahnstange
- 39: Zahnstange
- 40: Ritzelrad (von 33)
- 41: Ritzelrad (von 33)
- 42: Klemmvorrichtung
- 43: Zahnstange
- 44: Zahnstange
- 45: Umlenkrolle a, b
- 46: Umlenkrolle a, b
- 47: Rahmen (von 33)
- 48: Führungsrolle
- 49: Führung
- 50: Halterahmen
- 51: Abstand
- 52: Antriebsmotor (für 21) (Antrieb für Zahnriemen für Längsverschiebung)
- 53 54: Übertragungsriemen
- 55: Antriebsritzel
- 56: Riemenscheibe
- 57: Riemenscheibe
- 58: Führungsrolle (von 6, 16)

## Patentansprüche

1. Transportroboter mit einer Einzugsvorrichtung (16-19) zum Auf- und Abladen von Transportgut (13) auf den Transportroboter, wobei das Transportgut (13) seitlich zur Fahrtrichtung des Transportroboters (1) in einem Regallagerplatz (12) gelagert ist und die Einzugsvorrichtung (16-19) verschiebbar angetrieben und über mindestens eine der beiden Seiten der Außenkontur des Transportroboters verfahrbar und an das Transportgut (13) anlegbar ist, wobei die Einzugsvorrichtung (16-19) mindestens aus einem Einzugsarm (7, 8; 17, 18) gebildet ist, der als Längsförderer (6) zum Untergreifen an der Bodenseite des Transportgutes (13) ausgebildet ist, wobei der Einzugsarm (7, 8; 17, 18) jeweils über einen durchgehenden Zahnriemen (21, 21 a) angetrieben ist, wobei der durchgehende Zahnriemen (21, 21 a) über einen im Transportroboter (1) verschiebbar angetriebenen Schlitten (33) geführt ist, mit dessen Verschiebung die Verschiebebewegung des Einzugsarms (7, 8; 17, 18) gesteuert ist, wobei ein Einzugskopf (7a, 8a) jeweils an dem äußeren freien Ende des Einzugsarms (7, 8; 17, 18) angeordnet ist, wobei an der Seite des Einzugskopfs (7a, 8a) eine Auflaufschräge (29) angeordnet ist und wobei der Zahnriemen (21, 21a) über ein umlenkendes Riemenrad (20) am Einzugskopf (7a, 8a) geführt wird, **dadurch gekennzeichnet, dass** das vordere Ende des jeweiligen Einzugskopfes (7a, 8a) eine Stützrolle (15) zum Abstützen des Einzugskopfes (7a, 8a) in einem Hohlprofil (14) des Regalplatzes (12) aufweist und dass ein Stützarm (19) an der Achse des Riemenrades (20) ansetzt und die Stützrolle (15) am Stützarm (19) angeordnet ist.

2. Transportroboter nach Anspruch 1, **dadurch gekennzeichnet, dass** die Einzugsvorrichtung (16-19) aus zwei entgegen gesetzt gerichteten Einzugsarmen (7, 8; 17, 18) besteht.

3. Transportroboter nach Anspruch 2, **dadurch gekennzeichnet, dass** die beiden entgegen gesetzt gerichteten Einzugsarme (7, 8; 17, 18) jeweils als Längsförderer (6) ausgebildet sind, die gemeinsam über einen durchgehenden Zahnriemen (21, 21a) angetrieben sind.

4. Transportroboter nach einem der Ansprüche 1 bis 3, **dadurch gekennzeichnet, dass** jeder Einzugsarm (7, 8; 17, 18) der Einzugsvorrichtung aus zwei parallel zueinander und im gegenseitigen Abstand angeordneten Zahnriemen (21, 21a) besteht, die synchron angetrieben sind und dass die beiden Zahnriemen (21, 21a) über zueinander parallele Umlenkrollen (45, 46) auf dem in der Mitte zwischen den Zahnriemen (21,21 a) angeordneten Schlitten (33) geführt sind.

5. Transportroboter nach einem der Ansprüche 1 bis 4, **dadurch gekennzeichnet, dass** auf dem Transportroboter (1) zwei parallel zueinander angeordnete Einzugsarme (7, 8; 17, 18) vorgesehen sind, und dass jeder Einzugsarm (7, 8; 17, 18) aus jeweils zwei synchron miteinander angetriebenen Zahnriemen (21, 21a) besteht.

6. Verfahren zum Betrieb eines Transportroboters nach einem der Ansprüche 1 bis 5 zum Auf- und Abladen von Transportgut (13) auf den Transportroboter, wobei das Transportgut (13) seitlich zur Fahrtrichtung des Transportroboters (1) in einem Regallagerplatz (12) gelagert ist und die Einzugsvorrichtung (16-19) verschiebbar angetrieben und über mindestens eine der beiden Seiten der Außenkontur des Transportroboters verfahren und an das Transportgut (13) angelegt wird, wobei der Einzugskopf (7a, 8a), auf die vordere Kante des Transportgutes (13) auffährt und die Auflaufschräge (29) das Transportgut (13) beim Auffahren des Einzugskopfes (7a, 8a) an die vordere untere Bodenseite (22) anhebt und den Zahnriemen (21, 21a) des Einzugskopfes an dieser Stelle (Position 25) mit dem Transportgut (13) arretiert und danach nicht mehr weiterbewegt wird.

7. Verfahren nach Anspruch 6, **dadurch gekennzeichnet, dass** in der angehobenen Schwenklage des Transportgutes (13) ein Antrieb des Zahnriemens (21, 21a) dergestalt erfolgt, dass der Einzugsarm (7, 8; 17, 18) weiter unter die Bodenseite (22) des Transportgutes (13) untergefahren wird, und dass dabei eine Relativbewegung des oberen Trums des Zahnriemens (21, 21a) und der Bodenseite des Transportgutes arretiert ist.

8. Verfahren nach Anspruch 6 oder 7, **dadurch gekennzeichnet, dass** der Schlitten (33) die beiden endlos geführten Zahnriemen (21, 21a) miteinander synchronisiert.

9. Verfahren nach einem der Ansprüche 6 bis 8, **dadurch gekennzeichnet, dass** die einfache Verschiebebewegung des Schlittens (33) die doppelte Länge der Verschiebebewegung des Einzugsarms (7, 8; 17, 18) erreicht.

## Claims

1. Transport robot with a handling device (16-19) for loading and unloading goods (13) to be transported on the transport robot, wherein the goods (13) to be transported are stored at the side relative to the direction of travel of the transport robot (1) in a storage shelf (12) and the handling device (16-19) is driven so as to be displaceable and able to travel over at least one of the two sides of the external contour of the transport robot and can be brought into contact with the goods (13) to be transported, wherein the handling device (16-19) is formed of at least one handling arm (7, 8; 17, 18) which is embodied in the form of a longitudinal conveyor (6) for gripping underneath the underside of the goods (13) to be transported, wherein the handling arm (7, 8; 17, 18) is in each case driven by means of an endless toothed belt (21, 21a), wherein the endless toothed belt (21, 21a) is guided by means of a slide (33) which is driven so as to be displaceable in the transport robot (1), the displacement of which controls the direction of displacement of the handling arms (7, 8; 17, 18), wherein a handling head (7a, 8a) is arranged in each case at the outer free end of the handling arm (7, 8; 17, 18), wherein an upwardly inclined slope (29) is arranged on the side of the handling head (7a, 8a) and wherein the toothed belt (21, 21a) is guided over a deflecting belt pulley (20) on the handling head (7a, 8a), **characterised in that** the front end of the respective handling head (7a, 8a) has a supporting roller (15) for supporting the handling head (7a, 8a) in a hollow profile (14) of the storage shelf (12) and **in that** a supporting arm (19) bears on the spindle of the belt pulley (20) and the supporting roller (15) is arranged on the supporting arm (19).

2. Transport robot according to claim 1, **characterised in that** the handling device (16-19) consists of two handling arms (7, 8; 17, 18) directed in opposite directions.

3. Transport robot according to claim 2, **characterised in that** the two handling arms (7, 8; 17, 18) directed in opposite directions are each embodied in the form of a longitudinal conveyor (6) and driven together by means of an endless toothed belt (21, 21a).

4. Transport robot according to one of claims 1 to 3, **characterised in that** each handling arm (7, 8; 17, 18) of the handling device consists of two toothed belts (21, 21a) which are arranged parallel to one another and spaced a distance from one another and are driven synchronously and **in that** the two toothed belts (21, 21a) are guided over deflecting rollers (45, 46) which are parallel to one another on the slide (33) arranged in the middle between the toothed belts (21, 21a).

5. Transport robot according to one of claims 1 to 4, **characterised in that** two handling arms (7, 8; 17, 18) arranged parallel to one another are provided on the transport robot (1), and **in that** each handling arm (7, 8; 17, 18) consists of two toothed belts (21, 21a) which are driven synchronously with one another.

6. Method for operating a transport robot according to one of claims 1 to 5 for loading and unloading goods (13) to be transported on the transport robot, wherein the goods (13) to be transported are stored at the side relative to the direction of travel of the transport robot (1) in a storage shelf (12) and the handling device (16-19) is driven so as to be displaceable and made to travel over at least one of the two sides of the external contour of the transport robot and brought into contact with the goods to be transported (13), wherein the handling head (7a, 8a) is run up to the front edge of the goods to be transported (13) and the upwardly inclined slope (29) lifts the goods to be transported (13) when the handling head (7a, 8a) runs up against the front lower underside (22) and the toothed belt (21, 21a) of the handling head is stopped in this position (position 25) with the goods (13) to be transported and is not moved any further thereafter.

7. Method according to claim 6, **characterised in that** in the raised tilted position of the goods (13) to be transported the toothed belt (21, 21a) is driven in such a way that the handling arm (7, 8; 17, 18) is moved further under the underside (22) of the goods (13) to be transported and **in that** in the process a relative movement of the upper side of the toothed belt (21, 21a) and the underside of the goods to be transported is stopped.

8. Method according to claim 6 or 7, **characterised in that** the slide (33) synchronises the two endlessly guided toothed belts (21, 21 a) with one another.

9. Method according to one of claims 6 to 8, **characterised in that** the single displacement movement of the slide (33) is double the length of the displacement movement of the handling arms (7, 8; 17, 18).

## Revendications

1. Robot de transport avec un dispositif de manutention rétractable (16-19) pour charger et décharger un produit à transporter (13) sur le robot de transport, le produit à transporter (13) étant entreposé dans un emplacement de rayonnage (12) latéralement par rapport au sens de déplacement du robot de transport (1), et le dispositif de manutention rétractable (16-19) étant entraîné de manière coulissante, étant apte à être déplacé par l'intermédiaire de l'un au moins des deux côtés du contour extérieur du robot de transport, et étant apte à être appliqué contre le produit à transporter (13), le dispositif de manutention rétractable (16-19) étant composé au moins d'un bras de manutention rétractable (7, 8 ; 17, 18) qui est conçu comme un convoyeur longitudinal (6) pour venir en contact par-dessous avec le côté inférieur du produit à transporter (13), le bras de manutention rétractable (7, 8 ; 17, 18) étant entraîné respectivement par l'intermédiaire d'une courroie dentée continue (21, 21a), la courroie dentée continue (21, 21a) étant guidée par l'intermédiaire d'un coulisseau (33) qui est entraîné de manière coulissante dans le robot de transport (1) et dont le coulissement commande le mouvement coulissant du bras de manutention rétractable (7, 8 ; 17, 18), une tête de manutention rétractable respective (7a, 8a) étant disposée sur l'extrémité libre extérieure du bras de manutention rétractable (7, 8 ; 17, 18), un biseau formant rampe (29) étant disposé sur le côté de la tête de manutention rétractable (7a, 8a), et la courroie (21, 21a) étant guidée par l'intermédiaire d'une poulie de renvoi de courroie (20) sur la tête de manutention rétractable (7a, 8a), **caractérisé en ce que** l'extrémité avant de la tête de manutention rétractable respective (7a, 8a) comporte un galet de support (15) pour supporter la tête de manutention rétractable (7a, 8a) dans un profilé creux (14) de l'emplacement de rayonnage (12), et **en ce qu'**un bras de support (19) est prévu sur l'axe de la poulie de courroie (20), et le galet de support (15) est disposé sur le bras de support (19).

2. Robot de transport selon la revendication 1, **caractérisé en ce que** le dispositif de manutention rétractable (16-19) se compose de deux bras de manutention rétractables (7, 8 ; 17, 18) dirigés en sens inverse.

3. Robot de transport selon la revendication 2, **caractérisé en ce que** les deux bras de manutention rétractables (7, 8 ; 17, 18) dirigés en sens inverse sont conçus comme des convoyeurs longitudinaux (6) qui sont entraînés conjointement par l'intermédiaire d'une courroie dentée (21, 21a).

4. Robot de transport selon l'une des revendications 1 à 3, **caractérisé en ce que** chaque bras de manutention rétractable (7, 8 ; 17, 18) du dispositif de manutention rétractable se compose de deux courroies dentées (21, 21a) parallèles et espacées qui sont entraînées de manière synchrone, et **en ce que** les deux courroies dentées (21, 21a) sont guidées par l'intermédiaire de poulies de renvoi parallèles (45, 46) sur le coulisseau (33) disposé à mi-distance entre les courroies dentées (21, 21a).

5. Robot de transport selon l'une des revendications 1 à 4, **caractérisé en ce qu'**il est prévu sur le robot de transport (1) deux bras de manutention rétractables (7, 8 ; 17, 18) disposés parallèlement, et **en ce que** chaque bras de manutention rétractable (7, 8 ; 17, 18) se compose de deux courroies dentées (21, 21a) entraînées de manière synchrone.

6. Procédé pour le fonctionnement d'un robot de transport selon l'une des revendications 1 à 5 pour charger et décharger un produit à transporter (13) sur le robot de transport, le produit à transporter (13) étant entreposé dans un emplacement de rayonnage (12) latéralement par rapport au sens de déplacement du robot de transport (1), et le dispositif de manutention rétractable (16-19) étant entraîné de manière coulissante, étant déplacé par l'intermédiaire de l'un au moins des deux côtés du contour extérieur du robot de transport, et étant appliqué contre le produit à transporter (13), la tête de manutention rétractable (7a, 8a) arrivant sur le bord avant du produit à transporter (13) et le biseau formant rampe (29) soulevant le produit à transporter (13) lors de l'arrivée de la tête de manutention rétractable (7a, 8a) contre le côté inférieur avant (22), et arrêtant la courroie dentée (21, 21a) de la tête de manutention rétractable à cet endroit (position 25) avec le produit à transporter (13) et n'étant plus déplacé ensuite.

7. Procédé selon la revendication 6, **caractérisé en ce que** dans la position de pivotement soulevée du produit à transporter (13), un entraînement de la courroie dentée (21, 21a) a lieu de telle sorte que le bras de manutention rétractable (7, 8 ; 17, 18) est amené plus loin sous le côté inférieur (22) du produit à transporter (13), et qu'un déplacement relatif du brin supérieur de la courroie dentée (21, 21a) et du côté inférieur du produit à transporter est alors arrêté.

8. Procédé selon la revendication 6 ou 7, **caractérisé en ce que** le coulisseau (33) synchronise les deux courroies dentées sans fin (21, 21a)

9. Procédé selon l'une des revendications 6 à 8, **caractérisé en ce que** le mouvement coulissant simple du coulisseau (33) atteint deux fois la longueur du mouvement coulissant du bras de manutention rétractable (7, 8 ; 17, 18).
